# EUROPEAN PATENT APPLICATION

(11) **EP 4 846 827 A1**
(43) Date of publication of application: **02.12.2026**
(21) Application number: 26178503.4
(22) Date of filing: 13.05.2026
(51) Int. Cl.: A01B 79/00, A01B 69/00, A01D 41/127

(54) **STUBBLE HEIGHT MAPPING**

(30) Priority: 30.05.2025 GB 202508479
(71) Applicant: AGCO International GmbH, 8212 Neuhausen am Rheinfall (CH)
(72) Inventor: Bech, Søren, DK8900 Randers (DK); Lausdahl, Kenneth, DK8900 Randers (DK); Zhou, Kun, 8930 Randers (DK); Nilsson, Rene, DK8900 Randers (DK); Demmelmaier, Joseph, 87616 Marktoberdorf (DE)
(74) Representative: AGCO Intellectual Property Department

(57) **Abstract**

A mechanism for generating a map of stubble height within a predetermined agricultural region (e.g., a field) by using a computing system of an agricultural vehicle to indicate a height of stubble in at least part of the predetermined agricultural region. Additionally, a mechanism for using a generated map of stubble height within a predetermined agricultural region to automatically set an operating parameter of an agricultural vehicle within the predetermined agricultural vehicle based on its position.

## Description

### CROSS-REFERENCE TO RELATED APPLICATIONS

N/A.

### FIELD

Embodiments of the present disclosure relate to stubble height, and in particular to generating a map of stubble height.

### BACKGROUND

Both tillage preparation and plant protection procedures are highly dependent on field conditions, of which stubble height is an important aspect. If stubble height were known across a field, the quality of subsequent operations could thus be improved. For example, if a farmer were to perform a tillage operation without adjusting the height of a cultivator based on the height of the stubble then the tillage operation could fail to create a good seedbed for the next crop and this may result in a yield loss.

Furthermore, when multiple machines are operating on a field simultaneously, it would be helpful for each machine to have access to knowledge of the stubble height of the field - and this may not be consistent across the field.

### BRIEF SUMMARY

According to examples in accordance with this disclosure, there is provided a computer-implemented method for generating a map of stubble height within a predetermined agricultural region.

The computer-implemented method comprises: generating, by a first computing system of a first agricultural vehicle, stubble height information indicating a height of stubble in at least a first portion of the predetermined agricultural region; and generating, by a second computing system, a map of stubble height in the predetermined agricultural region responsive to the generated stubble height information.

The present disclosure thereby provides a mechanism for generating a map of stubble height within a predetermined agricultural region (e.g., a field) by using a computing system of an agricultural vehicle to indicate a height of stubble in at least part of the predetermined agricultural region.

For example, by breaking down a field into portions, and determining a height of stubble in each portion, a map of the stubble height throughout the field can be generated and then, for example, this map can be shared with any vehicle which intends to and/or is traversing through / operating in the field.

In some examples, the method further comprises generating, by a further computing system of a further agricultural vehicle, additional stubble height information indicating a height of stubble in at least a second portion of the predetermined agricultural region, wherein generating the map of stubble height is further responsive to the generated additional stubble height information. In this way, multiple vehicles can be used to generate the stubble height information and this information from the multiple vehicles can then be compiled together into a single map of stubble height in the predetermined agricultural region.

In some examples, the first agricultural vehicle is a combine. A combine creates stubble during harvest operations and thus it is efficient that a computing system of the combine generates the stubble height information as it creates the stubble.

In some examples, generating the stubble height information comprises processing a height of a header of the combine relative to the ground. This allows the stubble height information to be efficiently and accurately generated, as it is the height of the header relative to the ground (i.e., the distance from the header to the ground) which determines the height of the stubble.

In some examples, the first agricultural vehicle comprises a LiDAR or stereo vision system configured to generate vision data, and wherein generating the stubble height information is responsive to the vision data. This allows the height of the stubble to be visually observed and thus generated even using an agricultural vehicle which did not create the stubble.

In some examples, generating the stubble height information comprises processing a user input. This allows the user to influence the stubble height information, e.g., by manually measuring the height of the stubble and then inputting this information into the first computing system.

In some examples, the first computing system comprises the second computing system. This allows an agricultural vehicle which generates the stubble height information to also build the stubble height map.

In some examples, the second computing system comprises a cloud-based computing system. In this way, a cloud-based computer can generate the stubble height map, for example, by pulling and compiling stubble height information from one or more computing systems of agricultural vehicles.

In some examples, generating the map of stubble height is performed synchronously with generating the stubble height information. This allows the stubble height map to essentially be built and updated in real-time as the stubble height information is generated.

There is also provided a computer-implemented method for using a map of stubble height within the predetermined agricultural region generated according to any herein-disclosed embodiment.

The computer-implemented method comprises: obtaining, by a third computing system of a second agricultural vehicle, the generated map of stubble height in the predetermined agricultural region; monitoring, using a position monitoring device, the position of the second agricultural vehicle within the predetermined agricultural region; and determining, by the third computing system, an operating parameter of the second agricultural vehicle responsive to the stubble height at a location on the generated map of stubble height corresponding to the position of the second agricultural vehicle.

The present disclosure thereby provides a mechanism for using a generated map of stubble height within a predetermined agricultural region (e.g., a field) to automatically set an operating parameter of an agricultural vehicle within the predetermined agricultural region based on its position.

In some examples, the second agricultural vehicle is a tiller and the operating parameter is a working height of a tillage implement. The height of stubble is particularly useful information for a tiller to be aware of such that the working height of the tillage implement can be set so as not to interfere with or be obstructed by the stubble.

In some examples, the second agricultural vehicle is a sprayer and the operating parameter is a working height of a spraying implement for applying plant protection product. The height of stubble is particularly useful information for a sprayer to be aware of such that the working height of the spraying implement for applying plant protection product can be set so as to maintain optimal nozzle distance above the crop canopy without being obstructed by or misaligned due to the residual stubble.

In some examples, the second agricultural vehicle is a seeder and the operating parameter is a working height of a seeding implement for depositing seeds. The height of stubble is particularly useful information for a seeder to be aware of such that the working height of the seeding implement for depositing seeds can be set so as to ensure proper seed placement depth and avoid interference from residual stubble that could disrupt soil contact or seed row consistency.

In some embodiments, obtaining the generated map of stubble height comprises obtaining the generated map of stubble height synchronously with its generation by the second computing system. This allows the stubble height map to essentially be obtained in real-time by agricultural vehicles as it is built, for example, allowing a trailing vehicle to utilize the stubble height information as it is generated by the vehicle ahead.

There is also provided an agricultural vehicle, comprising a computing system comprising: at least one processor; and at least one non-transitory computer-readable storage medium storing instructions thereon that, when executed by the at least one processor, cause the computing system to: generate stubble height information indicating a height of stubble in at least a first portion of the predetermined agricultural region.

The computing system may be adapted to perform the acts of any herein proposed method, and vice versa.

In some examples, the at least one non-transitory computer-readable storage medium of the computing system further comprises instructions that, when executed by the at least one processor, cause the computing system to generate a map of stubble height in the predetermined agricultural region responsive to the generated stubble height information.

In some examples, the at least one non-transitory computer-readable storage medium of the computing system further comprises instructions that, when executed by the at least one processor, cause the computing system to make the obtained stubble height information accessible to a cloud-based computing system.

There is also provided an agricultural vehicle comprising a computing system comprising: at least one processor; and at least one non-transitory computer-readable storage medium storing instructions thereon that, when executed by the at least one processor, cause the computing system to: obtain a generated map of stubble height in a predetermined agricultural region; monitor, using a position monitoring device, the position of the agricultural vehicle within the predetermined agricultural region; and determine an operating parameter of the agricultural vehicle responsive to the stubble height at a location on the generated map of stubble height corresponding to the position of the agricultural vehicle.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method;
FIG. 2 is a flowchart illustrating a proposed method;
FIG. 3 is a flowchart illustrating a proposed method;
FIG. 4 is a flowchart illustrating a proposed method;
FIG. 5 is a flowchart illustrating another proposed method;
FIG. 6 illustrates a system comprising a computing system as herein proposed; and
FIG. 7 illustrates an agricultural vehicle comprising a computing system as herein proposed.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

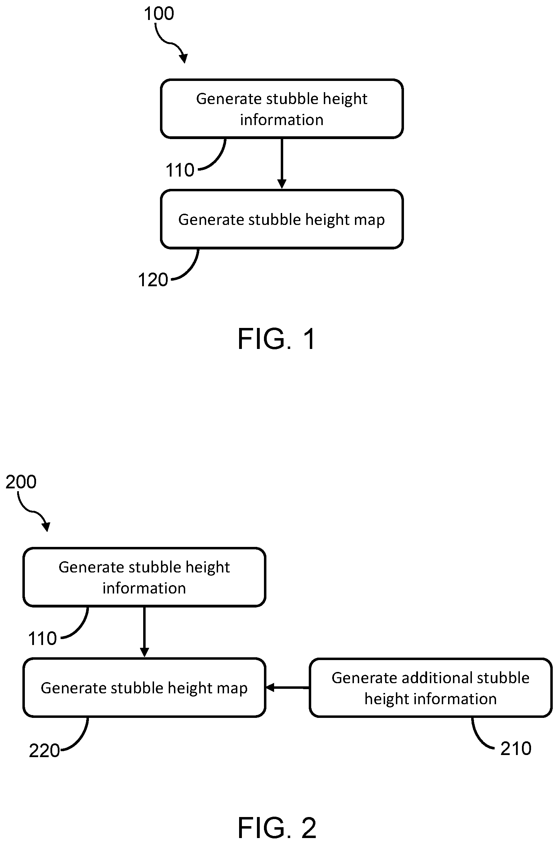

FIG. 1 is a flowchart illustrating a proposed computer-implemented method 100 that is executed, e.g., by a processing system, to perform the proposed approach. In particular, the method 100 is designed for generating a map of stubble height within a predetermined agricultural region.

The computer-implemented method 100 comprises an act 110 of generating, by a first computing system of a first agricultural vehicle, stubble height information indicating a height of stubble in at least a first portion of the predetermined agricultural region. An agricultural vehicle is to be understood as any ground-based machine configured to perform farming/agricultural operations, such as a tractor, combine, sprayer, harvester, seeder, etc. The predetermined agricultural region is to be understood as a region within which agricultural vehicles operate, for example, a field, a group of fields, or a defined area of farmland, etc. At least a first portion of a predetermined agricultural region can be understood as part or whole of said predetermined agricultural region. For example, in the simplest embodiment, the stubble height information indicates a height of stubble in the entire predetermined agricultural region, i.e., a single stubble height is set for the entire region. As the skilled person would appreciate, the smaller the portions into which the predetermined agricultural region is partitioned and the stubble height of each respective portion indicated, the more detailed and spatially-resolved the eventual stubble height map will be.

In this embodiment, the first agricultural vehicle is a combine, though in other embodiments, it need not be. A combine creates stubble during harvest operations and thus it is efficient that a computing system of the combine generates the stubble height information as it creates the stubble. The combine's computing system (i.e., the first computing system) can be any computing system of / within the combine that is suitable for generating stubble height information, i.e., measuring/receiving and recording stubble height. This applies equally to whatever type of first (or second) agricultural vehicle is used.

Furthermore, in this embodiment, act 110 of generating the stubble height information comprises processing a height of a header (a front-mounted component which cuts and gathers the crop) of the combine relative to the ground. For example, the height of the header at each point in the predetermined agricultural region can simply be taken as the height of the stubble at each said point in the predetermined agricultural region or, for example, the height of the header at a particular location can be input into an algorithm which generates the stubble height for said location accordingly. The skilled person would be aware of the variety of ways in which the height of the header of the combine could be processed in order to generate the stubble height information. This allows the stubble height information to be efficiently and accurately generated, as it is the height of the header relative to the ground (i.e., the distance from the header to the ground) which determines the height of the stubble. The distance from the header to the ground can be measured in many different ways, for example, using a sensor mounted on the header which measures the distance to the ground.

The computer-implemented method also comprises an act 120 of generating, by a second computing system, a map of stubble height in the predetermined agricultural region (i.e., a stubble height map of the predetermined agricultural region) responsive to (i.e., based on) the stubble height information generated in act 110. A map of stubble height in the predetermined agricultural region can be understood as a map of the predetermined agricultural region (e.g., a field) which indicates a height of the stubble at each point in the predetermined agricultural region for which stubble height information has been collected so far (and, of course, this will be dependent on the stubble height information and the granularity of said stubble height information). For instance, in portions of the field which have not had stubble height information collected for them so far, the stubble height map may indicate that no information is available for them yet or it may use the stubble height of surrounding portions to inform an estimate (e.g., averaging the stubble height of the nearest portions or simply taking the stubble height of the closest portion, etc.).

In this embodiment, the first computing system (of the first agricultural vehicle) comprises the second computing system. In other words, it is the same computing system (of the first agricultural vehicle) which both generates the stubble height information in act 110 and generates the map of stubble height in act 120. This allows the first agricultural vehicle to both generate the stubble height information and build the stubble height map. In embodiments in which multiple agricultural vehicles are generating the stubble height information, as will be discussed in more detail in relation to method 200 of FIG. 2, the computing systems of each of the fleet of agricultural vehicles may help to communally generate the stubble height map (via wireless communication) or, alternatively, the computing system of only one agricultural vehicle may be the one generating the stubble height map (e.g., after collecting the stubble height information from the other agricultural vehicles).

It should be noted that, in other embodiments, the second computing system can alternatively comprise a cloud-based computing system, e.g., a remote server infrastructure providing processing and storage resources accessible via a network connection. In this way, a cloud-based computer can generate the stubble height map, for example, pulling and compiling stubble height information from computing systems of one or more agricultural vehicles.

Furthermore, in this embodiment, generating the map of stubble height in act 120 is performed synchronously with generating the stubble height information in act 110. This allows the stubble height map to essentially be built and updated in real-time as the stubble height information is generated, though, of course, this is not essential to the working of the disclosure. For example, in other embodiments, the map of stubble height can be generated in act 120 non-synchronously with generating the stubble height information in act 110, i.e., after a substantial amount of time has passed.

FIG. 2 is a flowchart illustrating a proposed computer-implemented method 200 that is executed, e.g., by a processing system, to perform the proposed approach. In particular, the method 200 is designed for generating a map of stubble height within a predetermined agricultural region. Act 110 is substantially the same as has been described in relation to method 100 of FIG. 1.

Act 210 comprises generating, by a further computing system of a further agricultural vehicle (e.g., substantially similar to the first computing system of the first agricultural vehicle), additional stubble height information indicating a height of stubble in at least a second (different to the first) portion of the predetermined agricultural region. In other words, act 210 is substantially the same as act 110, however, being performed by a different agricultural vehicle on a different portion of the predetermined agricultural region. This allows multiple vehicles to work simultaneously, generating the stubble height information across the predetermined agricultural region, thus facilitating the more time-efficient generation of the stubble height map.

Thus, in act 220, compared to act 120 of method 100 of FIG. 1, generating the map of stubble height is further responsive to (i.e., further based on) the generated additional stubble height information. In this way, multiple vehicles can be used to generate (i.e., measure/receive and record) the stubble height information and this information from the multiple vehicles can then be compiled together into a single map of stubble height in the predetermined agricultural region. For example, in this embodiment, it may be preferable that the second computing system is a cloud-based computing system, such that the first agricultural vehicle and the further agricultural vehicle(s) can each send their stubble height information to (or have their stubble height information retrieved/pulled by) the cloud-based computing system for the stubble height map to be generated.

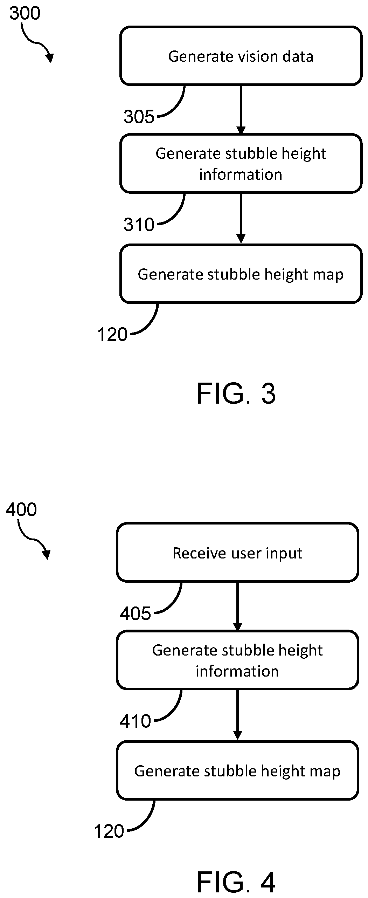

FIG. 3 is a flowchart illustrating a proposed computer-implemented method 300 that is executed, e.g., by a processing system, to perform the proposed approach. In particular, the method 300 is designed for generating a map of stubble height within a predetermined agricultural region. Act 120 is substantially the same as has been described in relation to method 100 of FIG. 1.

Act 305 comprises generating vision data using a LiDAR or stereo vision system of the first agricultural vehicle. The vision data comprises a representation of the stubble in at least the first portion of the predetermined agricultural region. Accordingly, in act 310, stubble height information is generated responsive to (i.e., based on) the vision data. For example, the vision data can be processed (e.g., by a machine-learning algorithm or neural network) such that the height of the stubble in the first portion of the predetermined agricultural region is extracted from the vision data, thus generating the stubble height information. This allows the height of the stubble to be visually observed and thus generated even using an agricultural vehicle which did not create the stubble. The LiDAR or stereo vision system can, for example, be mounted on the cabinet of the first agricultural vehicle or be mounted on any other suitable position on the first agricultural vehicle.

FIG. 4 is a flowchart illustrating a proposed computer-implemented method 400 that is executed, e.g., by a processing system, to perform the proposed approach. In particular, the method 400 is designed for generating a map of stubble height within a predetermined agricultural region. Act 120 is substantially the same as has been described in relation to method 100 of FIG. 1.

Act 405 comprises receiving a user input. The user input comprises an indication of the height of stubble in at least a first portion of the predetermined agricultural region. This user input may be facilitated by a suitable user input interface of the first computing system. Accordingly, in act 410, by processing the user input, stubble height information is generated. In other words, in act 410, stubble height information can be generated responsive to (i.e., based on) the user input. This allows the user to influence the stubble height information, e.g., by manually measuring the height of the stubble and then inputting this information into the first computing system.

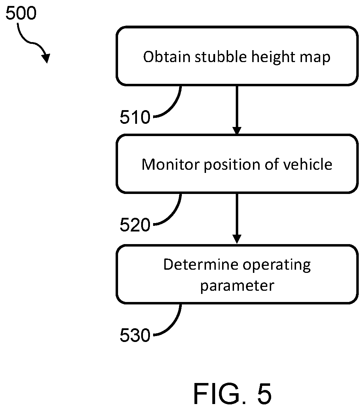

FIG. 5 is a flowchart illustrating a computer-implemented method 500 that is executed, e.g., by a processing system, to perform the proposed approach. In particular, the method 500 is designed for using a map of stubble height within the predetermined agricultural region generated according to any herein-disclosed embodiment (e.g., according to method 100, 200, 300, or 400).

Act 510 comprises obtaining, by a third computing system of a second agricultural vehicle, the generated map of stubble height in the predetermined agricultural region. In other words, in act 510, a computing system of an agricultural vehicle obtains (i.e., obtains access to) a stubble height map of the predetermined agricultural region.

It should be noted that in this embodiment, obtaining the generated map of stubble height in act 510 is performed synchronously with its generation by the second computing system (e.g., in act 120 of method 100 of FIG. 1). This allows the stubble height map to essentially be obtained in real-time by (one or more second) agricultural vehicles as the map is built/generated. For example, this can facilitate a trailing vehicle utilizing the stubble height information as it is generated by the vehicle ahead (if generating the stubble height map is also performed synchronously with the generation of the stubble height information).

Act 520 comprises monitoring, using a position monitoring device, the position of the second agricultural vehicle within the predetermined agricultural region.

Both the stubble height map and the position of the second agricultural vehicle within the predetermined agricultural region may be defined with respect to a predetermined spatial co-ordinate system, such as a global or geographic co-ordinate system (e.g., longitude and latitude), a region/local co-ordinate system (e.g., a trilaterated/triangulated position) or a relative co-ordinate system, such as one defined with respect to a boundary of the predetermined agricultural region.

Act 520 may be performed by the third computing system communicating or otherwise interacting with the position monitoring device to monitor the position of the second agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the stubble height map. Where appropriate or required, this may comprise performing a spatial transformation of the monitored/tracked position and/or the recommended route so that both sets of data lie in a same spatial co-ordinate system, i.e., share a same spatial co-ordinate system. Approaches for performing such a technique are well known in the art, particularly as the relationship between different spatial co-ordinate systems can be readily defined.

Put another way, the position monitoring device may be configured to define a position of the agricultural vehicle within a predefined co-ordinate system, and the generated map of stubble height may also be configured according to the predefined co-ordinate system.

Act 530 comprises determining, by the third computing system, an operating parameter of the second agricultural vehicle responsive to (i.e., based on) the stubble height at a location on the generated map of stubble height corresponding to the position of the second agricultural vehicle. In other words, an operating parameter of the second agricultural vehicle is dependent on the indicated stubble height at the point in the stubble height map corresponding to the present location of the second agricultural vehicle. An operating parameter of the agricultural vehicle can be understood as any controllable aspect of the agricultural vehicle.

For example, in this embodiment, the second agricultural vehicle is a tiller, and the operating parameter is a working height of a tillage implement. The height of stubble is particularly useful information for a tiller to be aware of such that the working height of the tillage implement can be set so as not to interfere with or be obstructed by the stubble. A tillage implement is any mechanical component used to disturb, break, or prepare soil, including tines, blades, discs, or rotors. The term "soil-engaging tools" may also be used.

In other embodiments, the second agricultural vehicle is a sprayer and the operating parameter is a working height of a spraying implement for applying plant protection product. The height of stubble is particularly useful information for a sprayer to be aware of such that the working height of the spraying implement for applying plant protection product can be set so as to maintain optimal nozzle distance above the crop canopy without being obstructed by or misaligned due to the residual stubble. A spraying implement is a device or apparatus configured to distribute liquid substances across a target area, typically using nozzles mounted on a boom or other delivery system.

In yet other embodiments, the second agricultural vehicle is a seeder and the operating parameter is a working height of a seeding implement for depositing seeds. The height of stubble is particularly useful information for a seeder to be aware of such that the working height of the seeding implement for depositing seeds can be set so as to ensure proper seed placement depth and avoid interference from residual stubble that could disrupt soil contact or seed row consistency, resulting in a more even seeding bed. A seeding implement is a device or apparatus configured to deposit seeds into the soil at a controlled depth and spacing, typically using openers, seed meters, and press wheels integrated into a seeder or planter system.

Optionally, the method 500 may further comprise an act of controlling an output user interface of the second agricultural vehicle to provide a visual representation of the stubble height map. Approaches for controlling an output user interface (e.g., a display or screen) to provide a visual representation of a data element will be readily apparent to the skilled person.

In summary, in a specific example of the disclosure, a combine creates a stubble height map based on its geo-referenced header height control setting (at the time of crossing a portion of the field) - this map can then be used by a subsequent tractor / tillage implement combination in order to continuously and automatically adjust the working height of its implement in response to the stubble height with the help of, for example, a Tractor Implement Management system.

The disclosure thus facilitates variable depth cultivation, improved work quality of subsequent tillage/seeding/spraying equipment with more efficient fuel consumption and reduced component wear, as well as promoting cost saving and environmental protection due to, for example, appropriate use of plant protection products (using as much as necessary and as little as possible).

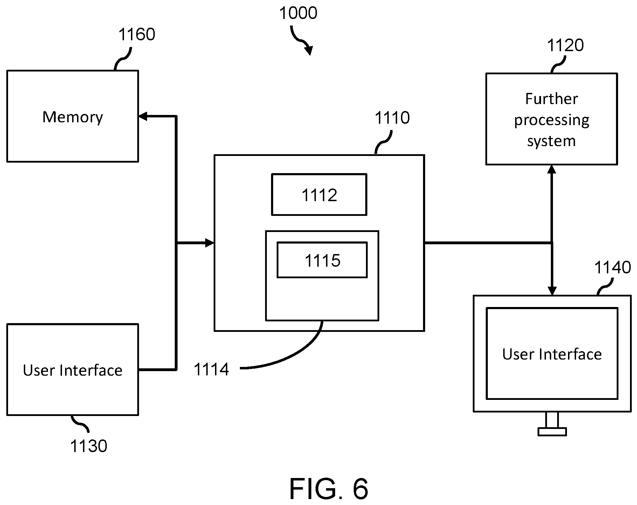

FIG. 6 illustrates an example of a system 1000 in which embodiments may be employed.

The system comprises a computing system 1110, which is itself an embodiment of the disclosure, an (optional) position monitoring device 1120, an (optional) input user interface 1130, and an (optional) output user interface 1140.

The computing system 1110 is configured to perform and/or co-ordinate the performance of any previously disclosed act that is identified as being performed by or using a computing system.

In particular examples, the computing system 1110 may perform the act of: generating stubble height information indicating a height of stubble in at least a first portion of the predetermined agricultural region.

In some examples, the computing system 1110 may further perform the act of: generating a map of stubble height in the predetermined agricultural region responsive to the generated stubble height information.

In some examples, the computing system 1110 may perform acts of: obtaining the generated map of stubble height in the predetermined agricultural region; monitoring, using a position monitoring device, the position of the second agricultural vehicle within the predetermined agricultural region; and determining an operating parameter of the second agricultural vehicle responsive to the stubble height at a location on the generated map of stubble height corresponding to the position of the second agricultural vehicle.

More specifically, the computing system 1110 may comprise at least one processor 1112 and at least one non-transitory computer-readable storage medium 1114 storing instructions 1115 thereon that, when executed by the at least one processor, cause the computing system to perform any previously disclosed act that is identified as being performed by or using the computing system.

The skilled person would be readily capable of developing a computing system for carrying out any herein described method. Thus, each act of the flow chart may represent a different action performed by a computing system and may be performed by a respective module of the computing system.

The position monitoring device 1120 may be configured to monitor the position of an agricultural vehicle within a predetermined agricultural region. Approaches for monitoring the position of a vehicle are well known in the art, some of which have been previously described in detail. The function or operation of the position monitoring system may be controlled by and/or responsive to instructions/communications from the computing system.

The computing system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to indicate a height of stubble in at least a first and/or second portion of the predetermined agricultural region.

The output user interface 1140 may be adapted to provide a visual representation of the map of stubble height and/or the determined operating parameter. In particular, the computing system 1110 may communicate with the output user interface (e.g., embodiable as a screen or display) to provide such a visual representation.

The system 1000 may further comprise a memory 1160 configured to store one or more instances of stubble height information and/or the stubble height map. The computing system may be configured to obtain one of the stubble height information and/or the stubble height map from the memory 1160.

There is also provided an agricultural vehicle comprising any herein disclosed computing system 1110 and (where appropriate) the position monitoring device 1120, input user interface 1130 and output user interface 1140. Additionally, the agricultural vehicle may optionally comprise a LiDAR or stereo vision system, as previously described. Furthermore, if the agricultural vehicle is a combine, its header may optionally comprise a sensor for measuring the distance from the header to the ground, as previously described.

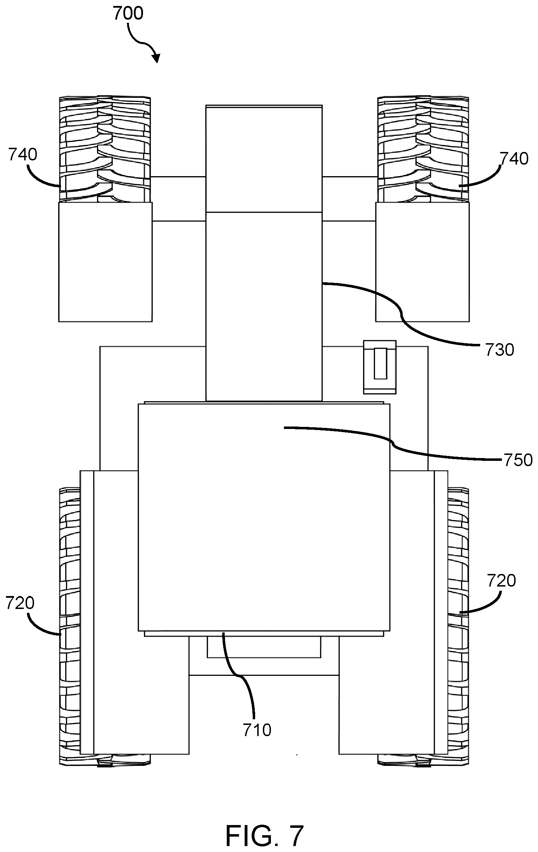

FIG. 7 illustrates an agricultural vehicle 700 comprising a computing system 750 as herein proposed.

For example, the agricultural vehicle 700 comprises a cabin 710; rear wheels 720; a hood 730; and front wheels 740. In this example, the computing system 750 (not shown) is situated in the cabin 710, but in other embodiments, the computing system 750 can be situated in any suitable place within the agricultural vehicle. In some embodiments, where appropriate, the agricultural vehicle 700 may further comprise a position monitoring device (as described above). For example, the position monitoring device may also be situated in the cabin 710.

The computing system 750 may comprise at least one processor (not shown); and at least one non-transitory computer-readable storage medium (not shown) storing instructions thereon that, when executed by the at least one processor, cause the computing system 750 to perform any herein-disclosed method.

In particular examples, the computing system 750 may perform the act of: generating stubble height information indicating a height of stubble in at least a first portion of the predetermined agricultural region.

In some examples, the computing system 750 may further perform the act of: generating a map of stubble height in the predetermined agricultural region responsive to the generated stubble height information and/or making the obtained stubble height information accessible to a cloud-based computing system. The obtained stubble height information being made accessible to a cloud-based computing system can be understood as the computing system 750 sending/transmitting or allowing the cloud-based computing system to retrieve the generated stubble height information.

In other particular examples, the computing system 750 may perform the acts of: obtaining the generated map of stubble height in the predetermined agricultural region; monitoring, using a position monitoring device, the position of the second agricultural vehicle within the predetermined agricultural region; and determining an operating parameter of the second agricultural vehicle responsive to the stubble height at a location on the generated map of stubble height corresponding to the position of the second agricultural vehicle.

It will be understood that disclosed methods are preferably computer-implemented methods. As such, there is also proposed the concept of a computer program comprising code means for implementing any described method when said program is run on a computing system, such as a computer. Thus, different portions, lines or blocks of code of a computer program according to an embodiment may be executed by a computing system or computer to perform any herein described method.

A computer program may be stored on a computer-readable medium, itself an embodiment of the disclosure. A "computer-readable medium" is any suitable mechanism or format that can store a program for later processing by a computing system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating a map of stubble height within a predetermined agricultural region, the computer-implemented method comprising:
generating, by a first computing system of a first agricultural vehicle, stubble height information indicating a height of stubble in at least a first portion of the predetermined agricultural region; and
generating, by a second computing system, a map of stubble height in the predetermined agricultural region responsive to the generated stubble height information.

2. The computer-implemented method of claim 1, further comprising generating, by a further computing system of a further agricultural vehicle, additional stubble height information indicating a height of stubble in at least a second portion of the predetermined agricultural region, wherein generating the map of stubble height is further responsive to the generated additional stubble height information.

3. The computer-implemented method of claim 1 or 2, wherein the first agricultural vehicle is a combine.

4. The computer-implemented method of claim 3, wherein generating the stubble height information comprises processing a height of a header of the combine relative to the ground.

5. The computer-implemented method of any of claims 1 to 4, wherein the first agricultural vehicle comprises a LiDAR or stereo vision system configured to generate vision data, and wherein generating the stubble height information is responsive to the vision data.

6. The computer-implementation method of any of claims 1 to 5, wherein generating the stubble height information comprises processing a user input.

7. The computer-implemented method of any of claims 1 to 6, wherein the first computing system comprises the second computing system.

8. The computer-implemented method of any of claims 1 to 6, wherein the second computing system comprises a cloud-based computing system.

9. The computer-implemented method of any of claims 1 to 8, wherein generating the map of stubble height is performed synchronously with generating the stubble height information.

10. A computer-implemented method for using a map of stubble height within the predetermined agricultural region generated according to any of claims 1 to 9, the computer-implemented method comprising:
obtaining, by a third computing system of a second agricultural vehicle, the generated map of stubble height in the predetermined agricultural region;
monitoring, using a position monitoring device, the position of the second agricultural vehicle within the predetermined agricultural region; and
determining, by the third computing system, an operating parameter of the second agricultural vehicle responsive to the stubble height at a location on the generated map of stubble height corresponding to the position of the second agricultural vehicle.

11. The computer-implemented method of claim 10, wherein the second agricultural vehicle is a tiller and the operating parameter is a working height of a tillage implement.

12. The computer-implemented method of claim 10, wherein the second agricultural vehicle is a sprayer and the operating parameter is a working height of a spraying implement for applying plant protection product.

13. The computer-implemented method of claim 10, wherein the second agricultural vehicle is a seeder and the operating parameter is a working height of a seeding implement for depositing seeds.

14. The computer-implemented method of any of claims 10 to 13, wherein obtaining the generated map of stubble height comprises obtaining the generated map of stubble height synchronously with its generation by the second computing system.

15. An agricultural vehicle, comprising:
a computing system comprising:
at least one processor; and
at least one non-transitory computer-readable storage medium storing instructions thereon that, when executed by the at least one processor, cause the computing system to:
generate stubble height information indicating a height of stubble in at least a first portion of the predetermined agricultural region.
